# EUROPEAN PATENT SPECIFICATION

(11) **EP 2 753 990 B1**
(45) Date of publication and mention of the grant of the patent: **30.12.2020**
(21) Application number: 12787856.9
(22) Date of filing: 15.10.2012
(51) Int. Cl.: G05B 13/04

(54) **A METHOD AND A SYSTEM FOR TUNING MULTIVARIABLE PID CONTROLLER**
VERFAHREN UND SYSTEM ZUM ABSTIMMEN MULTIVARIABLER PID-REGLER
PROCÉDÉ ET SYSTÈME PERMETTANT D'ACCORDER UN RÉGULATEUR PID MULTIVARIABLE

(30) Priority: 24.10.2011 IN 3637CH2011
(43) Date of publication of application: 16.07.2014
(73) Proprietor: ABB Schweiz AG, 5400 Baden (CH)
(72) Inventor: GUPTA, Arun, Mumbai 400 088 (IN)
(74) Representative: Zimmermann & Partner Patentanwälte mbB
(86) International application number: PCT/IB2012/002064
(87) International publication number: WO 2013/061126

(56) References cited:
- EP-A2- 2 302 469
- US-A1- 2005 107 895
- US-A1- 2008 071 395
- US-A1- 2009 198 350
- XIAOPING MA ET AL: "Tuning of the PID controller based on model predictive control", CONTROL AND DECISION CONFERENCE (CCDC), 2010 CHINESE, IEEE, PISCATAWAY, NJ, USA, 26 May 2010 (2010-05-26), pages 1091-1096, XP031699367, ISBN: 978-1-4244-5181-4

## Description

### FIELD OF THE INVENTION

The invention relates to controllers in a industrial control system, and more particularly to tuning of multivariable PID (Proportional Integral Derivative) Controller.

### BACKGROUND

A PID controller is a controller relating to control loop having feedback mechanism, and is the most commonly used feedback controller in an industrial control system. The PID controllers are employed in the control loops to minimize the error purporting to the difference between the measured process variable and the desired setpoint by adjusting the process control inputs.

PID controller involves constant parameters corresponding to proportional (P), integral (I) and derivative (D) values that are interpreted in terms of time, in which P depends on the present error, I on the accumulation of past errors and D being prediction of future errors. The weighted sum of these three parameters P, I and D is utilized in adjusting the process through control element such as position of a control valve etc.

In practice, the controllers need to be tuned through adjustment of its control parameters in order to achieve desired control response. Accordingly, PID controllers also require such tuning and is not trivial even though there are only three control parameters involved, for the reason that the tuning of the PID controller must satisfy complex criteria within the limitations of PID control such that it is a feedback system, the overall performance is reactive etc.

The tuning of PID based on heuristic rules or any other rules or the like known until now are focusing on single loop performance and do not address the process interactions. However, it becomes important to consider and address the process interactions to achieve better control of the processes.

A system is said to be multivariable if it has more than one variable to be controlled or more than one variable which can be manipulated. The Multivariable PID caters to the above said process interactions, and corresponds to multiple single loop PIDs with tuning that addresses the process interactions. Thus, Multivariable PIDs are better compared to single loop performance since it captures process information into the tuning rules. However, Supervisory controller such as Model Predictive Control (MPC), Fuzzy control, etc ensures better controller performance. MPC in particular accounts for constraints on the system while minimizing the output error in a predictive manner accounting for the predictive capability of process model into tuning rules. Currently, the PID controllers still continue to be the most predominantly used controllers in the process industries because of some of the more practically known reasons such as legacy, reliability, simplicity etc. Hence it becomes important to address the tuning of the PID controllers for multivariable processes in an optimal manner including the advantages of MPC, and the invention is aimed at providing a solution for such tuning of PID.

US 2005/107895 A1 discloses that in a control system for controlling a plant system or process, a model based problem can be formulated and an explicit control solution can be constructed off-line such that a parametric profile techniques. As a result the system can operate in real-time with significantly reduced computational burden.

US 2008/071395 A1 describes a model predictive control with stochastically handling output limit handling. Therein, cautious Model Predictive Control controllers and methods for stochastically handling output limits used in the optimization of control systems are disclosed. An illustrative method can include the steps of providing one or more modeled parameters and process variables to a predictor for predicting future expectations and variances along a control horizon, stochastically determining the probability of a constraint violation, optimizing a control function of the control system to produce an optimized solution, and offsetting the optimized solution based at least in part on the probability of a constraint violation.

Xiaoping Ma et al: "Tuning of the PID controller based on model predictive control", Control and Decision Conference, 26 May 2010 describes tuning of a PID controller based on Model Predictive Control. Therein, an algorithm of PID controller based on model predictive control is derived. With this algorithm, the three parameters of a PID controller are tuned to the process to obtain a closed-loop performance. Using this algorithm for time-delay system is proposed to enhance the real-time performance and the reliability of process control. Analyzed the three parameters tuned of a simple PID form, the effect is not ideal. A new structure is discussed which provides an effective way to solve this problem, which introduces feedback from actuator output to the controller. The new structure with constraint provides a way of modeling and control of process.

### OBJECTS OF THE INVENTION

It is an object of the invention to provide a method for tuning multivariable PID that includes MPC.

It is another object of the invention to provide a method for tuning multivariable PID that offers PID tuning parameter values corresponding tooptimal control solution.

It is also an object of the invention to provide a method for tuning multivariable PID in which manageable sets of PID parameters is achievable.

It is a further object of the invention to provide a system for tuning multivariable PID in accordance with the method of the invention.

### SUMMARY OF THE INVENTION

The present invention relates to a method for tuning an adaptive Multivariable Proportional- Integral-Derivative (PID) controller in a plant using a Model Predictive Control (MPC) according to claim 1.

Furthermore the present invention relates to a system for tuning an adaptive Multivariable Proportional-Integral-Derivative (PID) controller according to claim 11.

### BRIEF DESCRIPTION OF THE DRAWING

With reference to the accompanying drawing in which:

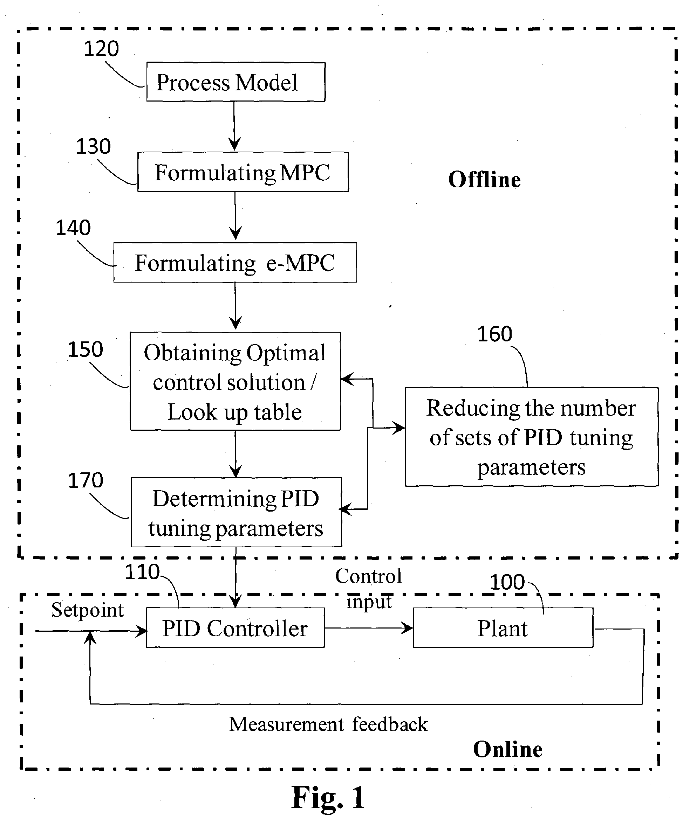

Fig. 1 shows the method for tuning Multivariable PID controller in accordance with the invention.

### DETAILED DESCRIPTION

The invention is described further herein after with reference to a non exhaustive exemplary embodiment and as illustrated in Fig.1.

In Fig.1, the plant (100) has at least one PID controller (110) for controlling the processes of the plant (100). The PID controller referred herein correspond or relate to any of the controller type viz. Proportional, Proportional-Integral, Proportional-Derivative or Proportional-Integral-Derivative. The plant (100) and the control processes related thereto are represented by a process model (120).

A Model Predictive Control (MPC) module is provided for formulating MPC for the process model (120). The formulation of MPC (130) is performed offline. Explicit-MPC (e-MPC) algorithms are utilized (140) for obtaining offline solution of MPC. The offline solution of MPC accounts for the constraints on the plant or the system. Also, it has the capability to minimize the error in a predictive manner. The solution of MPC therefore captures the predictive capability of the process model.

The solution of MPC provides optimal control solution (150) that caters to affine function of states in an identified critical region, and can be captured in a look up table. The content of the look up table, essentially each of the optimal control solution represents a static state feedback control law. From thereon, the PID tuning parameters are required to be determined corresponding to the optimal control solution by the optimizing module. This may involve reducing the number of sets of PID tuning parameters (160).

Reducing the number of sets of PID tuning parameters (160) can be achieved by a) merging or grouping certain critical regions and then determining the PID tuning parameters corresponding to the merged or grouped critical regions; or by b) merging or grouping some of the PID tuning parameters that been determined corresponding to different critical regions and then grouping or clustering such different critical regions together. However, the grouping of regions will result in relaxing the constraints on manipulated and/or control variables.

The PID tuning parameters and its corresponding operating range constitutes an adaptive gain PID controller. The PID controller (110) correlate with such adaptive gain PID controller or adaptive PID controller. Operating range is the range of values acceptable for all states, control variables and manipulated variables. A critical region is a subset of operating range that an optimal control solution is valid in one critical region. Summation of all critical region results in operating range.

The PID controller (110) is tuned (170) by the tuning module or the like, in relation to the PID tuning parameters, and with regard to an adaptive PID controller. The tuned PID controller which is a Multivariable PID controller purporting to multiple single loop PIDs with at least one control variables and corresponding manipulated variables is implemented online in closed loop in the plant. Since the optimal control solution are obtained considering the constraints on the plant and of the system thereof, the PID tuning parameters so determined also inherit the constraints that been considered. Therefore, the PID tuning parameters implicitly accounts for the constraints on the plant.

To understand the invention better, the invention is further described with a non exhaustive exemplary case.

Considering a discrete dynamical state-space model representing the plant and the system thereof: ${x}_{k + 1} = f \left({x}_{k}, {u}_{k}\right)$ ${y}_{k} = g \left({x}_{k}, {u}_{k}\right)$ which has the following constrains: ${y}_{min} \leq {y}_{k} \leq {y}_{max} , ∀ k > 0$ ${u}_{min} \leq {u}_{k} \leq {u}_{max} , ∀ k \geq 0$ $Δ {u}_{min} \leq Δ {u}_{k} \leq Δ {u}_{max} , ∀ k \geq 0$ where, $y ∈ {ℝ}^{p}$ is the vector of outputs, $u ∈ {ℝ}^{m}$ is the vector of inputs, $x ∈ {ℝ}^{n}$ is the vector of states and ${ℝ}^{m} ∋ Δ {u}_{k} = {u}_{k} - {u}_{k - 1}$ and *f* and *g* are functions of states *x* and inputs *u.* This general system, when linearized can also be represented in state space form as follows: ${x}_{k + 1} = {Ax}_{k} + {Bu}_{k}$ ${y}_{k} = {Cx}_{k} + {Du}_{k}$ MPC for both linear and non-linear system models are well established and is: $Ω = {min}_{U ≜ \left\{Δ{u}_{k},…,Δ{u}_{k + {N}_{u} - 1}\right\}} \left\{{\sum }_{j = 1}^{{N}_{y}} {\left({\hat{y}}_{k + j}-{y}_{{r}_{k + j}}\right)}^{T} {W}_{y} \left({\hat{y}}_{k + j}-{y}_{{r}_{k + j}}\right) + {\sum }_{j = 0}^{{N}_{u} - 1} {Δu}_{k + j}^{T} {W}_{Δ u} {Δu}_{k + j} + {\sum }_{j = 0}^{{N}_{u} - 1} {u}_{k + j}^{T} {W}_{u} {u}_{k + j}\right\}$ where, *ŷ* represents the estimated value of output from model and *y* represents the actual plant output. *N_{y}* and *Nᵤ* represents prediction and control horizons respectively.

The e-MPC formulation on an MPC problem is as follows: $Ω = {min}_{U ≜ \left\{Δ{u}_{k},…,Δ{u}_{k + {N}_{u} - 1}\right\}} \left\{\frac{1}{2}{U}^{T}HU+\left[\begin{matrix}{x}_{k} \\ {u}_{k - 1} \\ e\end{matrix}\right]FU\right\}$ such that $GU \leq W + E \left[\begin{matrix}{x}_{k} \\ {u}_{k - 1} \\ e\end{matrix}\right]$ where, *e* = *yᵣ* - *y* and *H, F, G, W, E* are constant matrices of appropriate dimensions. For e-MPC implementation the vector $\left[\begin{matrix}{x}_{k} \\ {u}_{k - 1} \\ e\end{matrix}\right]$ is represented as a vector *θ*. Please note that the input *u*_{*k*-1} appears only when constraints on rate of change of input are present.

The solution of the e-MPC can be obtained as the form of look up table shown as follows in Table 1:

**Table 1. Look up table showing solution of e-MPC**

| Operating range (critical regions) | Affine control law |
|---|---|
| *θ*₀ ≤ *θ* ≤ *θ*₁ | *U* = *M*₁*θₖ* + *m*₁ |
| *θ*₁ ≤ *θ* ≤ *θ*₂ | *U* = *M*₂*θₖ* + *m*₂ |
| ⋮ | ⋮ |
| *θ*_{*n*-1} ≤ *θ* ≤ *θₙ* | *U = Mₙθₖ* + *mₙ* |

where, *M*₁, *M*₂, ... *Mₙ* and *m*₁, *m*₂, ... *mₙ* are constant matrices of appropriate dimensions.

Each row of above table 1 represents a static state feedback control law, which can also be written as: $T \left(s\right) ≜ x \left(s\right) = {\left(sI-A\right)}^{- 1} B . u \left(s\right)$ which are rational, strictly proper *n* × *m* matrices.

An equivalent set of PID tuning parameter that can be obtained as follows:
A static state feedback controller is defined by, $u \left(s\right) = Fx \left(s\right) + Gv \left(s\right)$ where *v* is the external input. For e-MPC, this can be thought of as the error, *e* = *yᵣ* - *y* or $\left[\begin{matrix}{u}_{k - 1} \\ e\end{matrix}\right] .$

An equivalent transfer function of static state feedback controller can be found as, $u \left(s\right) = K \left(s\right) v \left(s\right)$ where, *K*(*s*) = [*I* - *FT*(*s*)]⁻¹*G.*

For the case, where *v* contains *e* only; *K*(*s*) presents a control law between the output error and the input, which is the case with PID controller. $u \left(s\right) = \left({K}_{P}+\frac{1}{{sT}_{I}}+{T}_{D}s\right) e \left(s\right)$

Then, the two control laws viz. affine control law and PID control law can be equated and PID tuning parameters can be calculated using polynomial form of transfer functions. In case of degree of polynomial in *K*(*s*) is larger than that of PID polynomial, the PID polynomial can be approximated to *K*(*s*) polynomial.

For the case, where *v* contains $\left[\begin{matrix}{u}_{k - 1} \\ e\end{matrix}\right] ;$ *K*(*s*) presents a control law between the output error and the change in input, which is the case with velocity PID controller.

Please note this is one of the many ways by which equivalent or approximate PID control law or of the PID tuning parameters can be determined. This does not restrict the invention to this particular method or its extensions.

The equivalent PID tuning parameter values in respect of the optimal control solution of affine control law is shown in below table 2.

**Table. 2 Equivalent PID tuning parameter values for optimal control solution of affine control law**

| Operating range (critical regions) | Affine control law | PID tuning parameter values |
|---|---|---|
| *θ*₀ ≤ *θ* ≤ *θ*₁ | *U* = *M*₁*θₖ* + *m*₁ | *P* = *P*₁; *I* = *I*₁; *D* = *D*₁ |
| *θ*₀ ≤ *θ* ≤ *θ*₁ | *U* = *M*₂*θₖ* + *m*₂ | *P* = *P*₂; *I* = *I*₂; *D* = *D*₃ |
| ⋮ | ⋮ | ⋮ |
| *θ*_{*n*-1} ≤ *θ* ≤ *θₙ* | *U* = *Mₙθₖ* + *mₙ* | *P* = *Pₙ*; *I* = *Iₙ*; *D* = *Dₙ* |

where, *P, I and D* are proportional, integral and derivative gains of a standard PID controller. In this case, these will be matrices of dimension equal to number of outputs (controlled variables).

Further there may be a reduction in the size of number of sets of PID tuning parameter. This can be achieved either by 1) merging certain critical regions and then calculating the PID tuning parameters corresponding to merged critical regions or by 2) merging some of the PID tuning parameters corresponding to different critical regions and then clustering those regions together.

The following table 3 shows the reduced set with *n* ≥ *l.*

**Table. 3 Reduced set of PID tuning parameters**

| Operating range (critical regions) | PID tuning parameter values |
|---|---|
| *θ*₀ ≤ *θ* ≤ *θ*₁ | *P* = *P*₁; *I* = *I*₁; *D* = *D*₁ |
| *θ*₁ ≤ *θ* ≤ *θ*₂ | *P* = *P*₂; *I* = *I*₂; *D* = *D*₃ |
| ⋮ | ⋮ |
| *θ*_{*l*-1} ≤ *θ* ≤ *θₗ* | *P* = *Pₗ*; *I* = *Iₗ; D* = *Dₗ* |

The PID tuning parameters values and their corresponding operating range constitute an adaptive gain PID controller.

This adaptive gain PID controller is implemented online in closed-loop with plant.

Only certain features of the invention have been specifically illustrated and described herein, and many modifications and changes will occur to those skilled in the art. The invention is not restricted by the preferred embodiment described herein in the description. It is to be noted that the invention is explained by way of exemplary embodiment and is neither exhaustive nor limiting. Certain aspects of the invention that not been elaborated herein in the description are well understood by one skilled in the art. Also, the terms relating to singular form used herein in the description also include its plurality and vice versa, wherever applicable. Any relevant modification or variation, which is not described specifically in the specification are in fact to be construed of being well within the scope of the invention. The appended claims cover all such modifications and changes. The presently disclosed embodiments are therefore considered in all respects to be illustrative and not restricted. The scope of the invention is indicated by the appended claims rather than the foregoing description.

## Claims

1. A method for tuning an adaptive Multivariable Proportional-Integral-Derivative PID controller within an operating range of the Multivariable PID controller, in a plant using a Model Predictive Control MPC, the operating range comprising a plurality of critical regions, the method comprising
formulating the MPC for a process model of the plant, wherein a solution of the MPC accounts for constraints on the plant;
obtaining an optimal control solution of the MPC in one or more critical regions from the plurality of critical regions using a look-up table comprising a plurality of rows, wherein each row of the look-up table is associated with a critical region from the plurality of critical regions, wherein each critical region from the plurality of critical regions is associated with a corresponding affine control law in the look-up table, the corresponding affine control law having the form *U* = *M·θ* + *m,* where *U* is an output, *θ* is an input, and *M* and *m* are constant matrices, and wherein the optimal control solution accounts for the constraints on the plant and the optimal control solution is for providing the affine control law corresponding to each of the one or more critical regions;
determining one or more equivalent PID tuning parameters for the one or more critical regions corresponding to the optimal control solution of the MPC in the one or more critical regions based on the one or more corresponding affine control laws from the plurality of affine control laws, wherein determining the one or more equivalent PID tuning parameters comprises one of (i) merging the one or more critical regions and (ii) clustering the one or more critical regions by merging the one or more equivalent PID tuning parameters corresponding to the one or more critical regions; and
tuning the adaptive Multivariable PID controller with the one or more equivalent PID tuning parameters to control the plant in the one or more critical regions.

2. The method as claimed in claim 1, comprising: formulating the MPC and obtaining the optimal control solution offline.

3. The method as claimed in claim 1 or 2, comprising:
obtaining the optimal control solution for the one or more critical regions purports to an affine function of one or more of states, inputs, or error in a critical region of operation.

4. The method as claimed in one of the preceding claims, wherein determining the one or more equivalent PID tuning parameters comprises: reducing the number of sets of PID parameters.

5. The method as claimed in claim 4, wherein reducing the number of sets of PID tuning parameters comprises:
merging a plurality of critical regions of operation, and determining PID tuning parameters corresponding to the plurality of critical regions of operations thereof.

6. The method as claimed in claim 4, wherein reducing the number of sets of PID tuning parameters comprises:
grouping two or more sets of PID tuning parameters corresponding to different critical regions, and merging the different critical regions.

7. The method as claimed in one of the previous claims, wherein obtaining the optimal control solution, in relation to the MPC comprises: accounting for one or more constraints of the plant.

8. The method as claimed in one of the previous claims, wherein the PID tuning parameters account for the predictive capability of the MPC in relation to the process model, by which an output error is minimized in a predictive manner.

9. The method as claimed in one of the previous claims 1, wherein the PID tuning parameters and their corresponding critical regions purport to the adaptive Multivariable PID controller with adaptive gain.

10. The method as claimed in one of the previous claims, comprising: implementing the adaptive Multivariable PID controller online in a closed loop in the

11. A system specifically adapted for tuning an adaptive Multivariable Proportional-Integral-Derivative PID controller in accordance with the method as claimed in any one of the preceding claims, the system comprising: at least one PID controller for controlling the processes of a plant;
a process model for the said plant; a MPC module for formulating MPC for the said process model; wherein the system comprises an optimizing module for obtaining optimal control solution and of the PID tuning parameters thereof; a tuning module for tuning the said at least one PID controller with the said PID tuning parameters.

12. The system as claimed in claim 11, wherein the said PID controller is an adaptive PID controller with adaptive gain in relation to the PID tuning parameters and its corresponding critical region.

13. The system as claimed in claim 11 or 12, wherein the MPC accounts for one or more constraints of the plant and has predictive capability by which the output error is minimized in a predictive manner.

14. The system as claimed in any one of the claims 11 to 13, wherein the Multivariable PID purports to multiple single loop PIDs with at least one control variables and corresponding manipulated variables..

## Patentansprüche

1. Verfahren zur Abstimmung eines adaptiven Mehrgrößen-Proportional-Integral-Differenzial-, PID-,Reglers innerhalb eines Betriebsbereichs des Mehrgrößen-PID-Reglers in einer Anlage unter Verwendung einer modellprädiktiven Regelung, MPC, wobei der Betriebsbereich eine Mehrzahl von kritischen Regionen umfasst, wobei das Verfahren umfasst:
Formulieren der MPC für ein Prozessmodell der Anlage, wobei eine Lösung der MPC Beschränkungen der Anlage berücksichtigt;
Erhalten einer optimalen Regelungslösung der MPC in einer oder mehreren kritischen Regionen aus der Mehrzahl von kritischen Regionen unter Verwendung einer Nachschlagetabelle mit einer Mehrzahl von Zeilen, wobei jede Zeile der Nachschlagetabelle mit einer kritischen Region aus der Mehrzahl von kritischen Regionen assoziiert ist, wobei jede kritische Region aus der Mehrzahl von kritischen Regionen mit einem entsprechenden affinen Regelungsgesetz in der Nachschlagetabelle assoziiert ist, wobei das entsprechende affine Regelungsgesetz die Form *U* = *M·θ* + *m* aufweist, wobei *U* eine Ausgabe ist, *θ* eine Eingabe ist, und *M* und *m* konstante Matrizen sind, und wobei die optimale Regelungslösung die Beschränkungen der Anlage berücksichtigt, und die optimale Regelungslösung zum Bereitstellen des affinen Regelungsgesetzes ist, das jeder der einen oder der mehreren kritischen Bereiche entspricht;
Bestimmen eines oder mehrerer äquivalenter PID-Abstimmungsparameter für die eine oder die mehreren kritischen Regionen, die der optimalen Regelungslösung der MPC in der einen oder den mehreren kritischen Regionen entsprechen, basierend auf dem einen oder den mehreren entsprechenden affinen Regelungsgesetzen aus der Mehrzahl von affinen Regelungsgesetzen, wobei das Bestimmen des einen oder der mehreren äquivalenten PID-Abstimmungsparameter eines von (i) Vereinigen der einen oder der mehreren kritischen Regionen und (ii) Clustern der einen oder der mehreren kritischen Regionen durch Vereinigen des einen oder der mehreren äquivalenten PID-Abstimmungsparameter umfasst, die der einen oder den mehreren kritischen Regionen entsprechen; und
Abstimmen des adaptiven Mehrgrößen-PID-Reglers mit dem einen oder den mehreren äquivalenten PID-Abstimmungsparametern zum Steuern der Anlage in der einen oder den mehreren kritischen Regionen.

2. Verfahren nach Anspruch 1, umfassend: Formulieren der MPC und Erhalten der optimalen Regelungslösung offline.

3. Verfahren nach Anspruch 1 oder 2, umfassend, dass:
das Erhalten der optimalen Regelungslösung für die eine oder die mehreren kritischen Regionen auf eine affine Funktion eines oder mehrerer von Zuständen, Eingaben oder Fehlern in einer kritischen Betriebsregion hindeutet.

4. Verfahren nach einem der vorhergehenden Ansprüche, wobei das Bestimmen des einen oder der mehreren äquivalenten PID-Abstimmungsparameter umfasst:
Reduzieren der Anzahl von Sätzen von PID-Parametern.

5. Verfahren nach Anspruch 4, wobei das Reduzieren der Anzahl von Sätzen von PID-Abstimmungsparametern umfasst:
Vereinigen einer Mehrzahl von kritischen Betriebsregionen und Bestimmen von PID-Abstimmungsparametern, die der Mehrzahl von kritischen Betriebsregionen davon entsprechen.

6. Verfahren nach Anspruch 4, wobei das Reduzieren der Anzahl von Sätzen von PID-Abstimmungsparametern umfasst:
Gruppieren zweier oder mehrerer Sätze von PID-Abstimmungsparametern, die verschiedenen kritischen Regionen entsprechen, und Vereinigen der verschiedenen kritischen Regionen.

7. Verfahren nach einem der vorhergehenden Ansprüche, wobei das Erhalten der optimalen Regelungslösung in Bezug auf die MPC umfasst: Berücksichtigen einer oder mehrerer Beschränkungen der Anlage.

8. Verfahren nach einem der vorhergehenden Ansprüche, wobei die PID-Abstimmungsparametern die Prädiktionsfähigkeit der MPC in Bezug auf das Prozessmodell berücksichtigen, durch welche ein Ausgabefehler prädiktiv minimiert wird.

9. Verfahren nach einem der vorhergehenden Ansprüche, wobei die PID-Abstimmungsparameter und ihre entsprechenden kritischen Regionen auf den adaptiven Mehrgrößen-PID-Regler mit adaptivem Gewinn hindeuten.

10. Verfahren nach einem der vorhergehenden Ansprüche, umfassend: Implementieren des adaptiven Mehrgrößen-PID-Reglers online in einer geschlossenen Schleife in der

11. System, das speziell zum Abstimmen eines adaptiven Mehrgrößen-Proportional-Integral-Differenzial-PID-Reglers gemäß dem Verfahren nach einem der vorhergehenden Ansprüche ausgelegt ist, wobei das System umfasst: mindestens einen PID-Regler zum Steuern der Prozesse einer Anlage; ein Prozessmodel für die Anlage; ein MPC-Modul zum Formulieren der MPC für das Prozessmodul; wobei das System ein Optimierungsmodul zum Erhalten einer optimalen Regelungslösung und der PID-Abstimmungsparameter davon und ein Abstimmungsmodul zum Abstimmen des mindestens einen PID-Reglers mit den PID-Abstimmungsparametern umfasst.

12. System nach Anspruch 11, wobei der PID-Regler ein adaptiver PID-Regler mit adaptivem Gewinn in Bezug auf die PID-Abstimmparameter und seine entsprechende kritische Region ist.

13. System nach Anspruch 11 oder 12, wobei die MPC eine oder mehrere Beschränkungen der Anlage berücksichtigt und Prädiktionsfähigkeit aufweist, durch welche der Ausgabefehler prädiktiv minimiert wird.

14. System nach einem der Ansprüche 11 bis 13, wobei Mehrgrößen-PID auf mehrere Einzelschleifen-PIDs mit mindestens einer Regelgröße und entsprechenden Stellgrößen hindeutet.

## Revendications

1. Procédé de réglage d'un contrôleur à action proportionnelle-intégrale-dérivée, PID, adaptatif à variables multiples, dans une plage de fonctionnement du contrôleur PID à variables multiples, dans une installation utilisant une commande prédictive à base de modèle, MPC, la plage de fonctionnement comprenant une pluralité de régions critiques, le procédé comprenant les étapes suivantes :
formuler la MPC pour un modèle de processus de l'installation, où une solution de la MPC tient compte des contraintes de l'installation ;
obtenir une solution de contrôle optimale de la MPC dans une ou plusieurs régions critiques de la pluralité de régions critiques en utilisant une table de consultation comprenant une pluralité de lignes, où chaque ligne de la table de consultation est associée à une région critique parmi la pluralité de régions critiques, où chaque région critique parmi la pluralité de régions critiques est associée à une loi de contrôle affine correspondante dans la table de consultation, la loi de contrôle affine correspondante ayant la forme *U* = *M·θ* + *m,* où *U* est une sortie, *θ* est une entrée, et *M* et *m* sont des matrices constantes, et où la solution de contrôle optimale tient compte des contraintes sur l'installation et la solution de contrôle optimale consiste à fournir la loi de contrôle affine correspondant à chacune des une ou plusieurs régions critiques ;
déterminer un ou plusieurs paramètres de réglage PID équivalents pour les une ou plusieurs régions critiques correspondant à la solution de contrôle optimale de la MPC dans les une ou plusieurs régions critiques sur la base des une ou plusieurs lois de contrôle affine correspondantes parmi la pluralité de lois de contrôle affine, où la détermination des un ou plusieurs paramètres de réglage PID équivalents comprend l'une des étapes suivantes : (i) fusionner les une ou plusieurs régions critiques et (ii) regrouper les une ou plusieurs régions critiques en fusionnant les un ou plusieurs paramètres de réglage PID équivalents correspondant aux une ou plusieurs régions critiques ; et
régler le contrôleur PID adaptatif à variables multiples avec les un ou plusieurs paramètres de réglage PID équivalents pour contrôler l'installation dans les une ou plusieurs régions critiques.

2. Procédé tel que revendiqué dans la revendication 1, comprenant de formuler la MPC et d'obtenir la solution de contrôle optimale hors ligne.

3. Procédé tel que revendiqué dans la revendication 1 ou la revendication 2, comprenant d'obtenir la solution de contrôle optimale pour les une ou plusieurs régions critiques, arguant être une fonction affine d'un ou plusieurs états, entrées ou erreurs dans une région critique de fonctionnement.

4. Procédé tel que revendiqué dans l'une des revendications précédentes, dans lequel la détermination des un ou plusieurs paramètres de réglage PID équivalents comprend de réduire le nombre d'ensembles de paramètres PID.

5. Procédé tel que revendiqué dans la revendication 4, dans lequel la réduction du nombre d'ensembles de paramètres de réglage PID comprend de fusionner une pluralité de régions critiques de fonctionnement et de déterminer des paramètres de réglage PID correspondant à la pluralité de régions critiques de fonctionnement de ceux-ci.

6. Procédé tel que revendiqué dans la revendication 4, dans lequel la réduction du nombre d'ensembles de paramètres de réglage PID comprend de regrouper deux, ou davantage, ensembles de paramètres de réglage PID correspondant à différentes régions critiques, et de fusionner les différentes régions critiques.

7. Procédé tel que revendiqué dans l'une des revendications précédentes, dans lequel l'obtention de la solution de contrôle optimale, par rapport à la MPC, comprend de prendre en compte une ou plusieurs contraintes de l'installation.

8. Procédé tel que revendiqué dans l'une des revendications précédentes, dans lequel les paramètres de réglage PID tiennent compte de la capacité de prédiction de la MPC par rapport au modèle du processus, par laquelle une erreur de sortie est minimisée de manière prédictive.

9. Procédé tel que revendiqué dans l'une des revendications précédentes, dans lequel les paramètres de réglage PID et leurs régions critiques correspondantes se rapportent au contrôleur PID adaptatif à variables multiples avec gain adaptatif.

10. Procédé tel que revendiqué dans l'une des revendications précédentes comprenant : mettre en œuvre le contrôleur PID adaptatif à variables multiples en ligne dans une boucle fermée dans le

11. Système spécifiquement adapté pour régler un contrôleur à action proportionnelle-intégrale-dérivée, PID, adaptatif à variables multiples selon le procédé tel que revendiqué dans l'une quelconque des revendications précédentes, le système comprenant : au moins un contrôleur PID pour contrôler les processus d'une installation ; un modèle de processus pour ladite installation ; un module MPC pour formuler la MPC pour ledit modèle de processus ; où le système comprend un module d'optimisation pour obtenir une solution de contrôle optimale et les paramètres de réglage PID de celle-ci ; un module de réglage pour régler ledit au moins un contrôleur PID avec lesdits paramètres de réglage PID.

12. Système tel que revendiqué dans la revendication 11, dans lequel ledit contrôleur PID est un contrôleur PID adaptatif avec un gain adaptatif par rapport aux paramètres de réglage PID et à sa région critique correspondante.

13. Système tel que revendiqué dans la revendication 11 ou la revendication 12, dans lequel la MPC tient compte d'une ou plusieurs contraintes de l'installation et dispose d'une capacité de prédiction par laquelle l'erreur de sortie est minimisée de manière prédictive.

14. Système tel que revendiqué dans l'une quelconque des revendications 11 à 13, dans lequel le PID multivariable se rapporte à plusieurs PID à boucle unique avec au moins une variable de contrôle et des variables manipulées correspondantes.
